# FASCICULE DE BREVET EUROPEEN

(11) **EP 0 508 917 B1**
(45) Date de publication et mention de la délivrance du brevet: **07.06.1995**
(21) Numéro de dépôt: 92420116.3
(22) Date de dépôt: 08.04.1992
(51) Int. Cl.: A01D 46/28

(54) **Dispositif de secouage de la végétation pour machine de récolte de baies et grappes**
Pflanzenschwingungsvorrichtung für eine Beren- und Traubenerntemaschine
Vegetation vibration device for berries and grapes harvesting machine

(30) Priorité: 12.04.1991 FR 9104755
(43) Date de publication de la demande: 14.10.1992
(73) Titulaire: SA ARNAUD FRERES, F-26130 Saint Paul Trois Châteaux (Drôme) (FR)
(72) Inventeur: Arnaud, Didier, F-26130 Saint Paul Trois Chateaux (FR)
(74) Mandataire: Perrier, Jean-Pierre

(56) Documents cités:
- EP-A- 0 267 829
- EP-A- 0 368 773
- FR-A- 2 638 600
- FR-A- 2 641 158

## Description

Pour récolter les baies et grappes, il est connu d'utiliser une machine de récolte composée d'un châssis pouvant enjamber une rangée de végétaux et comportant une tête de récolte apte à secouer la végétation, transversalement, en sens inverse et à basse fréquence, pour en détacher les baies et grappes qui sont recueillies, collectées et convoyées par des moyens appropriés portés par le châssis. Cette tête de récolte est munie de moyens qui, devant agir de chaque côté de la végétation, sont disposés de part et d'autre du plan médian vertical et longitudinal du châssis.

L'invention vise particulièrement les têtes de récolte comportant des outils composés chacun d'une barre longiforme qui, réalisée en matériau déformable élastiquement, d'une part, est ancrée rigidement à son extrémité antérieure sur un support vertical antérieur, calé dans le châssis et disposé en retrait du plan médian vertical précité, et d'autre part, présente, dans la zone de récolte, une partie rectiligne. Dans certaines formes d'exécution, cette barre est renforcée par un bras ancré sur un support postérieur.

Dans le dispositif de ce type décrit dans FR-A 2 641 158 et dans EP- A 368 773, la zone active de chaque barre de secouage constitue l'un des côtés d'un parallélogramme dont deux autres côtés parallèles sont constitués par le bras et un prolongement de la barre raccordé par un coude à la partie rectiligne de cette barre. Le mouvement de battage est fourni par les supports antérieurs, seuls ou avec les supports postérieurs.

De tels outils forment une structure hyperstatique qui, lorsqu'elle est soumise à des efforts de réactions, conduit à des efforts de réactions localisés très importants. L'usage montre que ces efforts ne peuvent être que très partiellement absorbés par la flexibilité de l'outil et provoquent rapidement, compte tenu de la fréquence de battage de l'outil, la détérioration de cet outil, notamment dans la zone de fixation de la barre longiforme avec le bras postérieur. Cette rigidité relative, d'une part, empêche d'absorber les variations dimensionnelles de la végétation qui peut aussi être détériorée, et d'autre part, favorise, lors du passage sur un obstacle rigide tel qu'un poteau, la transmission des vibrations à l'ensemble de la machine. Elle conduit à des casses fréquentes, et cela que la liaison entre le bras longiforme et le bras postérieur soit rigide, élastique ou articulé.

La présente invention a pour objet de remédier à ces inconvénients en fournissant un dispositif de secouage de la végétation qui soit souple, possède une faible masse, soit fiable, ait une grande faculté d'adaptation aux diverses formes et épaisseurs de la végétation et permette d'augmenter le rendement de la récolte, tout en respectant la végétation et les fruits.

A cet effet, dans le dispositif selon l'invention, la partie cambrée de la barre de chaque outil est cintrée suivant un arc de grand rayon s'étendant jusqu'à son ancrage, tandis que seul, le support vertical postérieur portant le bras d'entraînement est relié aux moyens moteurs aptes à le faire pivoter d'une fraction de tour, et alternativement dans un sens et dans l'autre.

Avec cet agencement, lorsque le bras d'entraînement d'un outil est pivoté en direction du plan médian de la machine par la poussée du bras postérieur moteur, il communique à la barre longiforme, constituant glissière de plaquage sur la végétation, un déplacement vers l'avant qui, par la fixation rigide de l'extrémité antérieure de cette glissière, provoque la réduction du rayon de l'arc de la barre et l'augmentation subséquente de la longueur de sa partie rectiligne. En d'autres termes, au fur et à mesure que le bras d'entraînement se déplace en direction de l'intérieur de la machine jusqu'à sa position maximale, il provoque l'augmentation progressive de la zone utile de la glissière de plaquage sur la végétation, tandis que, simultanément, le bras d'entraînement de l'outil disposé de l'autre côté de la machine, et travaillant en retenue, provoque une réduction de la longueur de la zone active de la glissière de plaquage correspondante. Bien entendu, lors de l'inversion du mouvement de pivotement des bras d'entraînement, les glissières en vis à vis sont soumises à des sollicitations inverses conduisant à une plus grande longueur de la zone active sur la glissière qui travaille en poussant et à une réduction de cette longueur sur la glissière qui travaille en retenant la végétation.

Grâce à ce mouvement, qui est progressif et qui s'effectue sans risque de fouettement, mais aussi grâce au grand rayon de courbure et la grande longueur cintrée formant amortisseur, et à l'entraînement par le bras postérieur, la végétation est sollicitée progressivement et, inversement, les réactions de la végétation ou de ses supports sur les outils s'effectuent également de manière progressive, donc sans risque pour le mécanisme.

D'autres caractéristiques et avantages ressortiront de la description qui suit en référence aux dessins schématiques annexés, représentant à titre d'exemple non limitatif une forme d'exécution de ce dispositif dans le cas de son application à une machine à vendanger.
Figure 1 est une vue en plan par dessus représentant, de manière schématique, une machine à vendanger de type tractée,
Figure 2 est une vue partielle en plan par dessus avec coupe partielle, montrant plus en détails une forme d'exécution du dispositif selon l'invention,
Figures 3 et 4 sont des vues en coupe transversale montrant à échelle agrandie des formes d'exécution des moyens de liaison de la glissière de plaquage avec le bras d'entraînement.

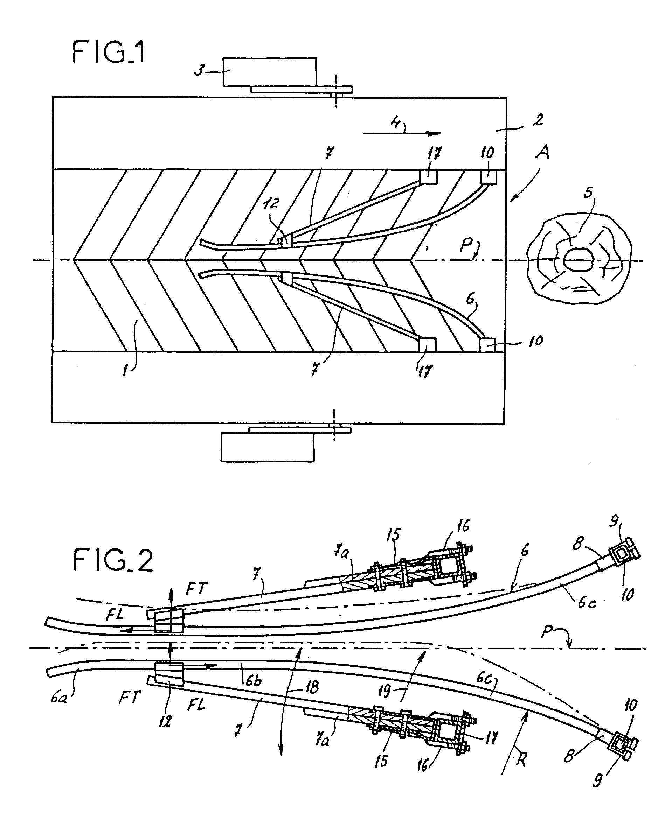

A la figure 1, la référence 2 désigne le châssis d'une machine à vendanger muni de roues 3 et relié à des moyens tracteurs, non représentés, pour le déplacement dans le sens de la flèche 4 au-dessus d'une rangée de ceps de vigne 5. Cette machine est munie d'une tête de récolte désignée, de façon générale, par A et composée de plusieurs paires superposées, d'outils dont les outils sont disposés dans chaque paire de part et d'autre du plan médian longitudinal et vertical représenté par l'axe P, et au-dessus d'un plan de collecte 1.

Selon l'invention, chaque outil est composé d'une glissière 6 de plaquage de la végétation et d'un bras d'entraînement 7. La barre constituant la glissière 6 et celle constituant le bras 7 sont réalisées dans un matériau déformable élastiquement et, par exemple, en polyamide.

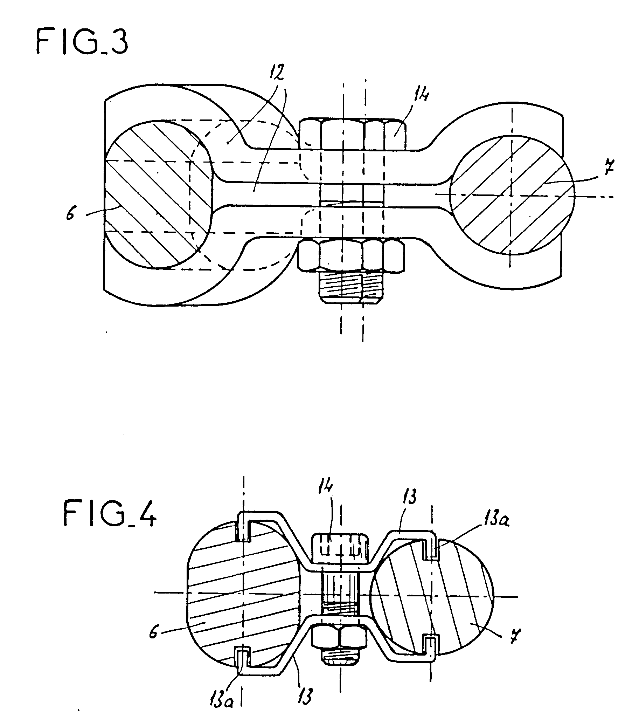

L'extrémité antérieure de chaque glissière 6 est fixée rigidement, par un manchon métallique 8 avec cavaliers 9, sur un support vertical antérieur 10 qui est calé dans le châssis 2 latéralement et à distance du plan P. L'extrémité postérieure de la glissière 6 est fixée à l'extrémité postérieure du bras d'entraînement 7 par deux coquilles 12, emprisonnant partiellement ces éléments, du type représenté à la figure 3, ou par deux brides 13 du type représenté à la figure 4, et comportant chacune un retour coudé 13a s'engageant dans une nervure longitudinale ménagée localement sur la partie rectiligne de la glissière et du bras. Dans ces deux formes d'exécution, la liaison entre les coquilles 12 ou les brides 13 est assurée par au moins deux boulons transversaux 14. Ces deux modes de fixation sont identiques et assurent une liaison positive et rigide des deux éléments.

Le bras d'entraînement 7 est renforcé dans sa partie antérieure par un contrebras 7a, également réalisé en matériau synthétique déformable élastiquement, et par exemple en polyamide. Ce contrebras 7a est lié au bras 7 par une ferrure 15 solidaire d'un cavalier 16 permettant la fixation de l'extrémité antérieure du bras d'entraînement sur un support vertical postérieur 17. Ce support, disposé latéralement et à distance du plan P, est lié à des moyens d'entraînement de type connu, aptes à lui communiquer un mouvement de pivotement alterné représenté par la flèche 18 de figure 2.

La figure 2 montre bien que la barre 6 constituant glissière de plaquage contre la végétation comporte, successivement, de son extrémité postérieure à son extrémité antérieure, une partie cintrée de dégagement 6a, une partie rectiligne 6b et une partie cambrée 6c qui, raccordant la partie rectiligne avec le manchon 8, c'est à dire s'étendant jusqu'à l'ancrage, présente une courbure de grand rayon R dont la convexité est tournée en direction du plan médian P de la machine à vendanger. Cette figure 2 montre également que chaque barre 6 forme avec son bras 7 un "V", dont on joue sur la déformation de la presque totalité de l'aile interne.

Les figures 3 et 4 montrent que, en section transversale, la barre 6 a une forme oblongue symétrique et est plus haute que large de manière à présenter une plus grande flexibilité dans le sens transversal, c'est à dire dans le plan horizontal.

Aux figures 1 et 2, les deux outils de la paire d'outils représentés, sont disposés en position de repos, c'est à dire sensiblement à égale distance de part et d'autre du plan médian P. En fonctionnement, lorsque le châssis 2 est déplacé dans le sens de la flèche 4 au-dessus la rangée de ceps de vigne 5, la végétation de chaque ceps pénètre successivement dans la tête de récolte A, de manière que les paires d'outils superposés, par exemple de cinq à sept paires, viennent en contact avec la totalité de la végétation. Simultanément aux déplacements du châssis 2, les moyens moteurs commandant les supports verticaux 17 actionnent ceux-ci de façon à ce qu'ils communiquent aux bras d'entraînement 7 des déplacements alternatifs suivant les flèches 18.

Si l'on se reporte à la figure 2, et qu'on examine les conséquences du pivotement dans le sens de la flèche 19 du bras 6, qui est inférieur à cette figure, et qui constitue le bras poussant la récolte, alors que celui supérieur à cette figure est celui retenant la récolte, on conçoit aisément que le mouvement de ce bras inférieur tende, par sa liaison avec la glissière 6, à communiquer à cette glissière, un mouvement transversal dans le sens de la flèche FT et un mouvement longitudinal dans le sens de la flèche FL. La glissière 6, en contact avec la végétation au moins par sa partie rectiligne 6b, et fixée rigidement au support vertical antérieur 10, est soumise à une contrainte longitudinale qui tend à réduire le rayon de sa partie cintrée 6c et, en conséquence, à augmenter la longueur de sa partie rectiligne 6b et, cela, en même temps qu'elle est déplacée transversalement. Dans le même temps, et sous l'action du pivotement dans le sens de la flèche 19 du bras d'entraînement qui est supérieur à la figure 2, l'autre glissière 6 est soumise à une force transversale FT et à une force longitudinale FL tendant à la tirer longitudinalement vers l'arrière. Il en résulte que cette glissière est soumise à des efforts longitudinaux tendant à augmenter le rayon R de sa partie cintrée 6c et, en conséquence, à réduire la longueur de sa partie rectiligne 6b.

Il ressort de ce qui précède que, dans le dispositif selon l'invention, la glissière, agissant sur la végétation en poussant, est soumise automatiquement à une augmentation de sa partie rectiligne agissant sur la végétation, tandis que la glissière, travaillant en retenant, est soumise à une réduction de la longueur de sa partie rectiligne.

Grâce à la structure en "V" de chaque outil, favorisant la répartition des efforts de réaction, à la présence sur l'aile intérieure de chaque "V" d'une barre cintrée sur une grande longueur favorisant sa déformation élastique sur toute cette longueur et constituant ainsi amortisseur, et grâce à l'entraînement par le bras postérieur 7, le dispositif de secouage selon l'invention, présente de nombreux avantages. En particulier, la structure très souple de chaque outil lui permet de s'adapter, sans réglage, aux diverses formes et épaisseurs de végétation. La légèreté de cette structure diminue les inerties et réduit les efforts mécaniques que cette dernière doit supporter, ce qui améliore sa longévité et la rend beaucoup plus fiable que celle des dispositifs actuels.

En outre, et grâce aux deux avantages précités, il est possible d'augmenter la longueur des barres 6, ce qui permet, avec une fréquence de secouage réduite à 380 coups par minute, de mieux préserver la végétation et d'améliorer la qualité de la vendange, et avec une vitesse de secouage classique, de l'ordre de 480 coups par minute, d'augmenter la vitesse d'avancement, sans pour autant détériorer la végétation, les baies et les grappes.

Dans une forme d'exécution non représentée, pour réduire la transmission des vibrations au châssis, mais aussi pour réduire les contraintes d'encastrement à l'extrémité antérieure des glissières de plaquage 6, les supports verticaux antérieurs 10 sur lesquels ces glissières sont fixées rigidement, sont eux-mêmes liés au châssis avec interposition d'amortisseurs élastiques en rotation, tels que des blocs en caoutchouc, ou élastomère, ne tolérant qu'une faible rotation.

Il est évident que le dispositif de récolte de vendange qui a été décrit ci-dessus dans le cas de son application à une machine tractée, peut aussi être monté sur une machine motorisée, et sur toute machine pour la récolte de baies ou fruits.

## Revendications

1. Dispositif de secouage de la végétation pour machine de récolte de baies et de grappes, comprenant un châssis enjambeur (2), au moins une paire d'outils disposés en vis à vis et de part et d'autre du plan médian vertical (P) du châssis enjambeur (2), et des moyens moteurs aptes à communiquer aux outils des mouvements transversaux alternés, chacun de ces outils étant composé, d'une part, d'une barre longiforme (6) qui, réalisée en matériau déformable, est ancrée rigidement par son extrémité antérieure sur un support vertical antérieur (10), calé dans le châssis enjambeur (2) et décalé latéralement par rapport au plan médian vertical précité, présente, dans la zone de récolte, une partie rectiligne (6b), et comporte, entre sa partie rectiligne (6b) et son ancrage (8-10), une zone cambrée dont la convexité est tournée vers le plan médian (P) précité, et d'autre part, d'un bras (7) ancré sur un support vertical postérieur (17) et lié rigidement à la partie rectiligne (6b), **caractérisé en ce que** la partie cambrée (6c) de la barre (6) de chaque outil est cintrée suivant un arc de grand rayon s'étendant jusqu'à son ancrage (8), tandis que seul, le support vertical postérieur (17) portant le bras d'entraînement (7) est relié aux moyens moteurs aptes à le faire pivoter d'une fraction de tour, et alternativement dans un sens et dans l'autre.

2. Dispositif selon la revendication 1, **caractérisé en ce que** chaque barre (6) constituant une glissière de plaquage de la végétation présente une section transversale oblongue, plus haute que large, de manière à présenter une plus grande flexibilité dans le plan horizontal.

3. Dispositif selon l'une quelconque des revendications 1 et 2, **caractérisé en ce que** chacun des supports verticaux antérieurs (10) est lié au châssis avec interposition d'amortisseurs élastiques limitant sa rotation angulaire.

4. Dispositif selon l'une quelconque des revendications 1 et 2, **caractérisé en ce que** la glissière (6) de plaquage de la végétation est liée à l'extrémité antérieure du bras d'entraînement (7) par deux coquilles (12) emprisonnant les parties supérieures de ces barres et liées l'une à l'autre par des boulons transversaux (14).

5. Dispositif selon l'une quelconque des revendications 1 à 4, **caractérisé en ce que** chaque glissière (6) de plaquage de la végétation est liée à l'extrémité antérieure du bras d'entraînement (7) correspondant par deux brides (13) liées l'une à l'autre par des boulons transversaux (14) et comportant, chacune, des retours coudés (13a) s'engageant dans des nervures longitudinales, ménagées localement sur la partie rectiligne de la glissière et du bras d'entraînement.

## Claims

1. A vegetation shaking device for a machine for harvesting berries and bunches of fruit, including a straddling frame (2), at least one pair of implements oppositely disposed and to either side of the vertical median plane (P) of the straddling frame (2), and motor means adapted to communicate alternating transverse movements to the implements, each of the implements comprising, on the one hand, an elongate bar (6) which, being made of a deformable material, is rigidly anchored by its front end on a front vertical support (10) fixed into the straddling frame and laterally offset with respect to the aforementioned vertical median plane, has, in its collecting area, a rectilinear portion (6b), and includes, between its rectilinear portion (6b) and its anchorage (8-10), a curved region of which the convexity is towards the aforementioned median plane (P), and on the other hand, an arm (7) anchored on a rear vertical support (17) and rigidly connected to the rectilinear portion (6b), **characterised in that** the curved portion (6c) of the bar (6) of each implement is bent along an arc of large radius extending as far as its anchorage (8), whilst only the rear vertical support (17) carrying the driving arm (7) is connected to the motor means adapted to cause it to pivot through a fraction of a turn, and alternately in one direction and the other.

2. A device according to Claim 1, **characterised in that** each bar (6) constituting a slide for laying down the vegetation has an oblong transverse section, higher than it is wide, so as to provide greater flexibility in the horizontal plane.

3. A device according to either of Claims 1 and 2, **characterised in that** each of the front vertical supports (10) is connected to the frame with the interposition of resilient shock absorbers limiting its angular rotation.

4. A device according to either of Claims 1 and 2, **characterised in that** the slide (6) for laying down the vegetation is connected to the front end of the driving arm (7) by two bushings (12) confining the upper portions of the bars and connected to one other by transverse bolts (14).

5. A device according to any one of Claims 1 to 4, **characterised in that** each slide (6) for laying down the vegetation is connected to the front end of the corresponding driving arm (7) by two straps (13) connected to one another by transverse bolts (14) and each having bent returns (13a) engaging in longitudinal grooves formed locally on the rectilinear portion of the slide and of the driving arm.

## Patentansprüche

1. Pflanzenschüttelvorrichtung für eine Beeren- und Traubenerntemaschine, umfassend: ein Grätschfahrwerk (2), wenigstens ein Paar Werkzeuge, die beidseits der vertikalen Mittelebene (P) des Grätschfahrwerks (2) einander gegenüberliegend angeordnet sind, und Motormittel, die den Werkzeugen alternierende Querbewegungen verleihen können, wobei jedes dieser Werkzeuge zusammengesetzt ist einerseits aus einer länglichen, aus verformbarem Material gefertigten Stange (6), welche mit ihrem vorderen Ende an einem vorderen, an dem Grätschfahrwerk (2) befestigten und bezüglich der vorgenannten vertikalen Mittelebene seitlich versetzten, vertikalen Träger (10) starr verankert ist, in dem Sammelbereich einen geradlinigen Abschnitt (6b) aufweist und zwischen ihrem geradlinigen Abschnitt (6b) und ihrer Verankerung (8-10) einen gekrümmten Bereich umfaßt, dessen Konvexität zur vorgenannten Mittelebene (P) hin weist, und andererseits aus einem Schenkel (7), der an einem hinteren vertikalen Träger (17) verankert und mit dem geradlinigen Abschnitt (6b) starr verbunden ist, **dadurch gekennzeichnet**, daß der gekrümmte Abschnitt (6c) der Stange (6) jedes Werkzeugs längs eines Bogens mit grossem Radius gebogen ist, der bis zu seiner Verankerung (8) verläuft, während allein der hintere vertikale Träger (17), der den Mitnahmeschenkel (7) trägt, mit den Motormitteln verbunden ist, die ihn über den Bruchteil einer Umdrehung und alternativ in einer oder der anderen Richtung verschwenken können.

2. Vorrichtung nach Anspruch 1, **dadurch gekennzeichnet**, daß jede ein Gleitstück zum Gegen-die-Pflanze-Schlagen bildende Stange (6) einen länglichen, höheren als breiten, Querschnitt umfaßt, um in der Horizontalebene größere Flexibilität aufzuweisen.

3. Vorrichtung nach einem der Ansprüche 1 und 2, **dadurch gekennzeichnet**, daß jeder der vorderen vertikalen Träger (10) mit dem Fahrwerk unter Zwischenanordnung von elastischen Dämpfern verbunden ist, welche seine Winkeldrehung begrenzen.

4. Vorrichtung nach einem der Ansprüche 1 und 2, **dadurch gekennzeichnet**, daß das Gleitstück zum Gegen-die-Pflanze-Schlagen (6) mit dem vorderen Ende des Mitnahmeschenkels (7) mittels Backen (12) verbunden ist, welche die oberen Teile dieser Stangen umschließen und miteinander über Querbolzen (14) verbunden sind.

5. Vorrichtung nach einem der Ansprüche 1 bis 4, **dadurch gekennzeichnet**, daß jedes Gleitstück zum Gegen-die-Pflanze-Schlagen (6) mit dem jeweiligen vorderen Ende des Mitnahmeschenkels (7) über zwei Schellen (13) verbunden ist, welche miteinander über Querbolzen (14) verbunden sind und jeweils abgewinkelte Flansche (13a) umfassen, welche in Längsrillen eingreifen, die lokal auf dem geradlinigen Teil des Gleitstücks und des Mitnahmeschenkels eingreifen.
